# EUROPÄISCHE PATENTANMELDUNG

(11) **EP 2 381 558 A2**
(43) Veröffentlichungstag der Anmeldung: **26.10.2011**
(21) Anmeldenummer: 11003304.0
(22) Anmeldetag: 20.04.2011
(51) Int. Cl.: H02J 7/00

(54) **System aus einer mobilen Einheit und einer Vorrichtung zum berührungslosen Laden der mobilen Einheit mit elektrischer Energie**

(30) Priorität: 20.04.2010 DE 102010015510
(71) Anmelder: GIRA GIERSIEPEN GmbH & Co. KG, 42477 Radevormwald (DE)
(72) Erfinder: Kemmann, Harald, 42555 Velbert (DE); Seifert, Roland, 59071 Hamm (DE)
(74) Vertreter: Tönhardt, Marion

(57) **Zusammenfassung**

Die Erfindung beschreibt ein System, das wenigstens umfasst: eine mobile Einheit (200), welche ein magnetisches Element und einen Speicher für elektrische Energie aufweist; und eine Vorrichtung (100) zum berührungslosen Laden der mobilen Einheit mit elektrischer Energie, wobei die Vorrichtung (100) einen Sockel (110) aufweist, in dem eine magnetisch wirkende Anordnung (140) und eine Steuerelektronik (160) zum Einrichten und Anpassen des von der magnetisch wirkenden Anordnung (140) erzeugten Magnetfeldes derart, dass die mobile Einheit (200) in der Schwebe gehalten wird, untergebracht sind, wobei eine Einrichtung vorgesehen ist, die den Speicher der schwebenden mobilen Einheit (200) induktiv und/oder kapazitiv lädt.

## Beschreibung

Die Erfindung betrifft ein System aus einer mobilen Einheit und einer Vorrichtung zum berührungslosen Laden der mobilen Einheit mit elektrischer Energie.

Eine mobile Einheit, beispielsweise eine Fernbedienung, muss in regelmäßigen oder unregelmäßigen Abständen mit Energie versorgt werden, damit sie ihre Steuerfunktionen, gegebenenfalls auch Kommunikationsfunktionen, ausüben kann. Zweckmäßig ist, das Aufladen in einer Vorrichtung durchzuführen, in der die mobile Einheit auch aufbewahrt werden kann.

In modernen Wohnsituationen besteht oft das Bedürfnis, eine derartige Vorrichtung in positiver Weise zu integrieren, so dass sich beispielsweise ein "Eye-Catcher"-Szenario ergibt.

Die WO 2008/058562 A1 beschreibt ein System aus einer mobilen Einheit und einer Vorrichtung zum berührungslosen Laden der mobilen Einheit. Die mobile Einheit umfasst wenigstens ein magnetisches Element und einen Speicher für elektrische Energie. Die Vorrichtung zum berührungslosen Laden der mobilen Einheit umfasst eine magnetisch wirkende Anordnung und eine Steuerelektronik zum Einrichten und Anpassen des von der magnetisch wirkenden Anordnung erzeugten Magnetfeldes und ist darauf ausgelegt, dass die mobile Einheit in der Vorrichtung zum berührungslosen Laden hängend gelagert ist.

Die US 2009/0146608 A1 beschreibt eine Vorrichtung zum kontaktlosen Beladen einer mobilen Einheit mittels induktiver oder kapazitiver Kopplung.

Auch aus der EP 1 689 062 B1 sind eine Vorrichtung und ein Verfahren für das Beladen einer Batterie mittels kapazitiver Kopplung bekannt. Dabei ist vorgesehen, dass die mobile Einheit während des Ladevorgangs auf einem Ladetablett lagert.

Es ist daher die Aufgabe der Erfindung, ein System bereitzustellen, bei dem eine intelligente Vorrichtung vorgesehen ist, die es erlaubt, dass eine mobile Einheit ästhetisch ansprechend aufbewahrt und mit der ein Speicher für elektrische Energie der mobilen Einheit aufgeladen werden kann.

Diese Aufgabe wird von einem System gemäß Anspruch 1 gelöst. Vorteilhafte Ausgestaltungen sind Gegenstand der Unteransprüche.

Das erfindungsgemäße System umfasst wenigstens eine mobile Einheit, die ein magnetisches Element und einen Speicher für elektrische Energie aufweist und würfelförmig ausgebildet ist.. Das magnetische Element kann dabei aus ferromagnetischem Material, insbesondere Metallen oder Legierungen, die bei Raumtemperaturen ferromagnetische Eigenschaften aufweisen, aufgebaut sein und als separates Bauteil oder integral mit der mobilen Einheit, beispielsweise als Teil eines Gehäuses, ausgebildet sein. Ferner umfasst das erfindungsgemäße System eine Vorrichtung zum berührungslosen Laden der mobilen Einheit mit elektrischer Energie, wobei die Vorrichtung einen Sockel aufweist, in dem eine magnetisch wirkende Anordnung und eine Steuerelektronik zum Einrichten und Anpassen des von der magnetisch wirkenden Anordnung erzeugten Magnetfeldes derart, dass die mobile Einheit in der Schwebe gehalten wird, untergebracht sind, wobei eine Einrichtung vorgesehen ist, die den Speicher der schwebenden mobilen Einheit induktiv und/oder kapazitiv lädt. Die mobile Einheit ist in der Schwebe über der Vorrichtung angeordnet. Die Steuerelektronik kann dabei das Magnetfeld so einrichten, dass eine aufzubewahrende und aufzuladende mobile Einheit beispielsweise mittig über dem Sockel schwebt. Dadurch wird bei aller Funktionalität eine ungewöhnlich anmutende Ästhetik erzielt.

Das drahtlose Laden eines Speichers für elektrische Energie in einer mobilen Einheit ist beispielsweise in der US 7,548,040 B2, in der US 7,042,196 B2 und in der US 6,184,651 beschrieben. Niemals wird aber das Laden beschrieben, während die mobile Einheit über der Ladestation bzw. einem Sockel schwebt.

Die Erfindung verwendet zum induktiven Laden des Speichers für elektrische Energie eine Einrichtung, die ein erstes induktives Element in oder an der Vorrichtung und ein zweites induktives Element in oder an der mobilen Einheit aufweist. Entsprechend umfasst zum kapazitiven Laden des Speichers für elektrische Energie die Einrichtung ein erstes kapazitives Element in oder an der Vorrichtung und ein zweites kapazitives Element in oder an der mobilen Einheit.

Vorteilhaft kann die Vorrichtung einen Sensor zum Identifizieren der mobilen Einheit aufweisen.

Zweckmäßigerweise sollte nur dann ein Ladevorgang stattfinden, wenn sich die mobile Einheit in einer definierten Ladeposition befindet. Daher ist weiter vorteilhaft vorgesehen, dass die Vorrichtung einen Positionssensor aufweist, der die Position der mobilen Einheit erfasst und ein entsprechendes Signal an die Steuerelektronik ausgibt.

Die erfindungsgemäße Vorrichtung kann, in Umsetzung ihrer Intelligenz, eine drahtlose Kommunikationseinheit zur Kommunikation mit der mobilen Einheit besitzen. Die Kommunikation kann beispielsweise entsprechend dem Bluetooth-Standard geschehen. Wenn eine WLAN-fähige Schnittstelle vorgesehen ist, kann die Vorrichtung als zum Einrichten einer kabellosen Gateway-Verbindung eingesetzt werden. Die Vorrichtung kann außerdem, wenn sie über eine reine Fernbedienungseinheit zum Ansteuern eines oder mehrerer Geräte hinausgeht, eine kabelgebundene oder auch drahtlose Kommunikationseinheit zur Kommunikation mit einem Gebäudesteuerungs-Bussystem besitzen.

Die Vorrichtung kann weiterhin eine Anzeigeeinrichtung für den Ladezustand des Speichers für elektrische Energie der mobilen Einheit aufweisen.

Nach einer Ausgestaltung der Erfindung umfasst die mobile Einheit einen Träger, an den der Speicher für elektrische Energie lösbar zu koppeln ist, wobei die Kopplung eine elektrische Kopplung umfasst. Diese elektrische Kopplung kann beispielsweise mit Hilfe eines USB-Kabels geschehen. Somit könnte beispielsweise der Akkumulator eines Mobilfunkgerätes, der dann den Speicher für elektrische Energie gemäß der Erfindung bildet, geladen werden.

Nach einer bevorzugten Ausgestaltung dieser mehrkomponentigen mobilen Einheit sollen das zweite induktive Element bzw. das zweite kapazitive Element dem Speicher für elektrische Energie, nicht aber der Trägerplatte zugeordnet sein.

Um die mobile Einheit möglichst zuverlässig in die Gleichgewichtsposition über dem Sockel zu bringen, weist der Sockel bevorzugt eine entsprechende Aufnahme auf, in die die mobile Einheit mit Punkt und/oder Linienkontakt einzusetzen ist. Dabei sind kurze Kontaktlinien bzw. wenige Kontaktpunkte wesentlich, damit die Kräfte, um die mobile Einheit zum Schweben zu bringen, leicht aufgebracht werden können. Beispielsweise könnte die Aufnahme trichterförmig sein, so dass die würfelförmige mobile Einheit in diesem Trichter mit vier Kontaktpunkten anliegt.

Schließlich kann die Vorrichtung einen Mechanismus zum Auswerfen der mobilen Einheit aufweisen.

Im Folgenden soll die Erfindung anhand der beigefügten Zeichnung näher erläutert werden. Es zeigt:
- Figur 1: eine schematische, perspektivische Ansicht eines beispielhaften erfindungsgemäßen Systems aus einer Vorrichtung zusammen mit einer mobilen Einheit;
- Figur 2: eine Detailansicht einer Aufnahme in der Vorrichtung mit darin sitzender mobiler Einheit;
- Figur 3: ein Blockschaubild, das die verschiedenen Komponenten der Vorrichtung und der mobilen Einheit veranschaulicht; und
- Figur 4: eine schematische, perspektivische Ansicht eines weiteren beispielhaften erfindungsgemäßen Systems.

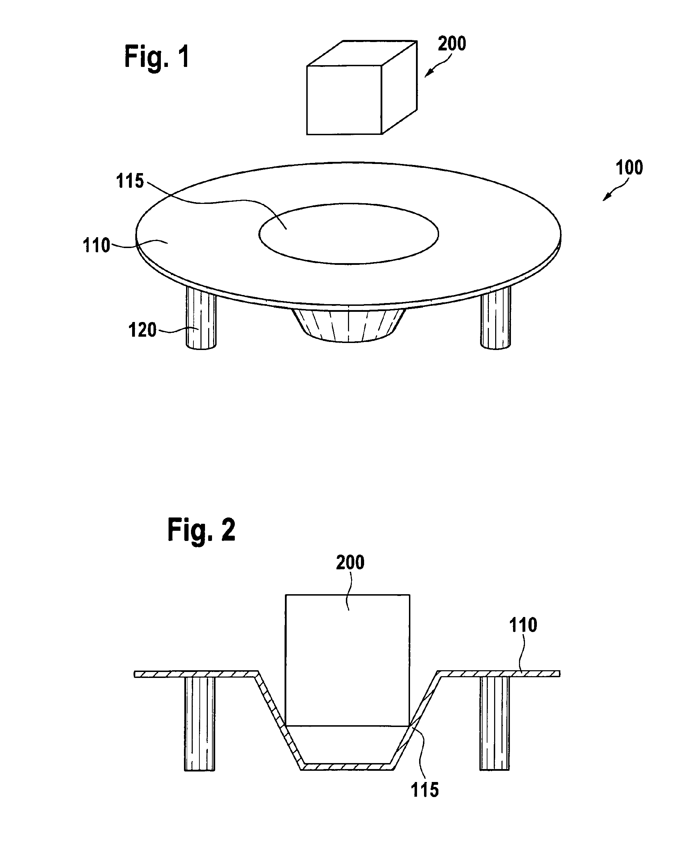

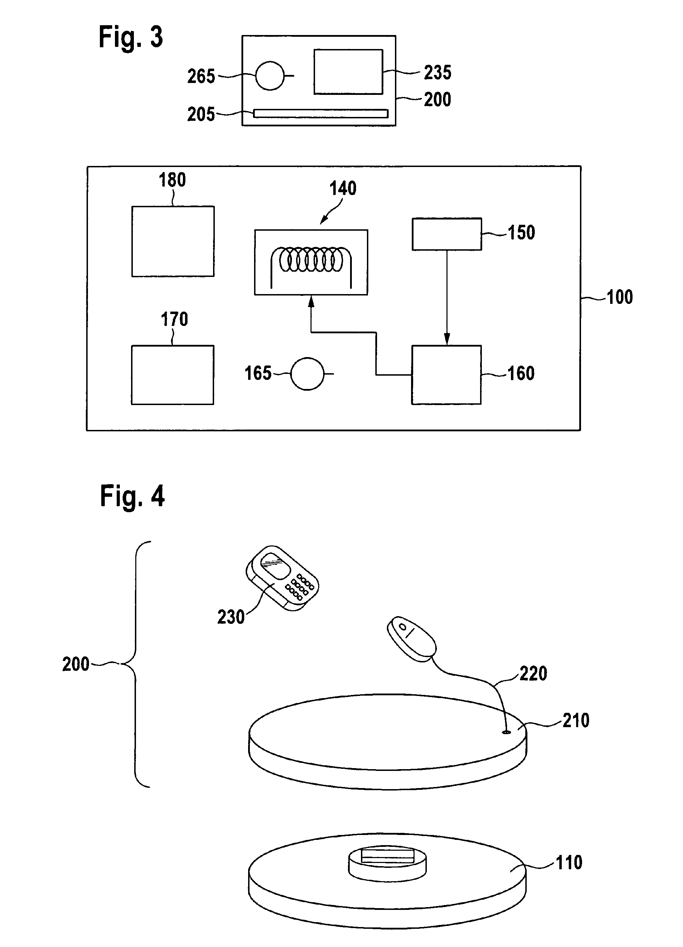

In Figur 1 ist als Vorrichtung 100 zum berührungslosen Laden einer mobilen Einheit ein schalenförmiger Sockel 110 gezeigt, der mittig eine Öffnung oder Aufnahme 115 aufweist. Die Form des Sockels ist dabei nicht auf eine Schale beschränkt, er kann als Platte, beispielsweise mit kreisrundem oder polygonalem Umriss, als Ring oder in anderen Formen verwendet werden. Der Sockel 110 ruht bei der dargestellten Ausführungsform auf drei Füßen 120, die im Winkelabstand von 120° am Boden des Sockels 110 angebracht sind. Im Innenraum des Sockels 110 ist eine magnetisch wirkende Anordnung (140; Figur 3) angeordnet, die so gesteuert wird, dass sie die mobile Einheit 200 in der Schwebe hält. Ein Beispiel für eine derartige magnetisch wirkende Anordnung zeigt die US 7,348,691 B2, die ein rückgekoppeltes System beschreibt, welches in der Lage ist, die mobile Einheit 200 stabil über dem Sockel 110 oberhalb der Aufnahme 115 und damit in ihrer Ladeposition zu halten, in der sie mittels einer noch zu beschreibenden Ladeeinrichtung geladen wird. Die mobile Einheit 200 weist dabei ein magnetisches Element auf, das später noch genauer beschrieben wird, so dass sie auf die Wechselwirkungskraft der magnetisch wirkenden Anordnung 140 anspricht.

Figur 2 zeigt eine schematische Schnittansicht des Sockels 110 im Bereich der Aufnahme 115. Die Aufnahme 115 ist beispielhaft trichterförmig ausgebildet. Die mobile Einheit 200, hat nur an ihren unteren vier Eckpunkten Kontakt mit den schräg verlaufenden Wänden der Aufnahme 115, so dass keine das Anheben erschwerende Flächenhaftkräfte auftreten. In dieser Position in der Aufnahme 115 kann beispielsweise auch eine Identifikation der mobilen Einheit 200 mittels eines geeigneten Sensors (nicht dargestellt) erfolgen.

Figur 3 zeigt die Vorrichtung 100 und die mobile Einheit 200 schematisch als Blockschaubild. In der Vorrichtung 100 wird eine magnetisch wirkende Anordnung 140, beispielsweise aus Permanentmagneten und Elektromagneten bestehend, abhängig von Positionssignalen der mobilen Einheit 200, die von einem Positionssensor 150 erfasst und von einer Steuerelektronik 160 ausgewertet werden, angesteuert, so dass eine über der magnetisch wirkenden Anordnung 140 befindliche mobile Einheit 200 angehoben und in der Schwebe gehalten werden kann. Sobald ein stabiler Zustand für die mobile Einheit 200 erreicht worden ist, kann, gegebenenfalls ansprechend auf einen Sensor (nicht dargestellt), der den Ladezustand der mobilen Einheit 200 feststellt, die bereits angesprochene Ladeeinrichtung mit dem Aufladen der mobilen Einheit 200, genauer ihres Speichers, beginnen. Während des Aufladens und/oder während sich die mobile Bedieneinheit 200 in ihrer Aufbewahrungsposition befindet und/oder abhängig von der Position bzw. dem Ort der mobilen Einheit 200 kann eine Kommunikation mit der Vorrichtung 100 durchgeführt werden, die über eine Kommunikationseinheit 170 vermittelt wird. Die Kommunikationseinheit 170 kann dabei beispielsweise nach dem Bluetooth-Standard arbeiten. Wenn sie WLAN-fähig ist, kann eine kabellose Gateway-Verbindung eingerichtet werden. Die Kommunikationseinheit 170 kann auch zur Kommunikation mit einem Gebäudesteuerungs-Bussystem dienen, wobei die Information kabelgebunden oder kabellos, wie zuvor beschrieben, übermittelt wird.

Die Vorrichtung 100 kann weiterhin über eine Anzeigeeinrichtung 180 verfügen, mit der beispielsweise Information über den Ladezustand der mobilen Einheit 200 angezeigt werden kann. Die Anzeigeeinrichtung 180 kann aus einer Vielzahl von LEDs oder ähnlichen Bauelementen bestehen, die auf der Oberseite des Sockels 110 der Vorrichtung 100 (Figur 1) angeordnet sind, aus Elementen für eine Balkendarstellung oder dergleichen.

Die mobile Einheit 200 umfasst ein magnetisches Element 205, das hier als separates Bauteil dargestellt ist, aber auch beispielsweise einen Teil einer Gebäudewand bilden kann. Dieses magnetische Element 205 wechselwirkt mit dem Magnetfeld, das von der magnetisch wirkenden Anordnung 140 erzeugt wird und sorgt letztlich dafür, dass die mobile Einheit 200 über der Vorrichtung 100 schweben kann. Das magnetische Element ist bevorzugt aus ferromagnetischem Material aufgebaut, insbesondere aus Metallen und Legierungen mit ferromagnetischen Eigenschaften, wie Eisen, Kobalt, Nickel und Legierungen aus diesen, die beispielsweise aus Permalloy oder Mu-Metall bekannt sind. Die mobile Einheit 200 umfasst weiterhin einen Speicher 235 für elektrische Energie, beispielsweise einen Lithium-Ionen-Akkumulator oder einen Lithium-Polymer-Akkumulator.

Das System aus der mobilen Einheit 200 und der Vorrichtung 100 zum berührungslosen Laden der mobilen Einheit 200 mit elektrischer Energie weist außerdem eine Einrichtung auf, die den Speicher 235 der schwebenden mobilen Einheit 200 induktiv und/oder kapazitiv lädt. Dabei weist beispielsweise zum induktiven Laden des Speichers diese Einrichtung ein erstes induktives Element 165 auf, beispielsweise eine Spule, die in oder an der Vorrichtung 100 vorgesehen ist, sowie ein zweites induktives Element 265, beispielsweise ebenfalls eine Spule, die in oder an der mobilen Einheit 200 vorgesehen ist. Die Energie wird dann, vermittelt durch die Spulen 165, 265, induktiv von der Vorrichtung 100 zu der mobilen Einheit 200 übertragen. Bei einer Ausgestaltung, die das kapazitive Laden des Speichers verwendet, bestünde die Einrichtung aus einem ersten kapazitiven Element in oder an der Vorrichtung 100 und einem zweiten kapazitiven Element in oder an der mobilen Einheit 200, die auf an sich bekannte Weise zum Übertragen von Energie zusammenwirken.

Figur 4 zeigt eine Ausführungsform eines erfindungsgemäßen Systems, bei dem die mobile Einheit 200 aus mehreren Komponenten besteht, nämlich einer Trägerplatte 210, einem elektrischen Anschluss, beispielsweise einem USB-Kabel 220, und einem getrennten Speicher für elektrische Energie, der beispielsweise als Akkumulator in einem Mobilfunkgerät 230 ausgebildet ist. Das Mobilfunkgerät 230 kann lösbar an das USB-Kabel 220 angeschlossen und auf der Trägerplatte 210 abgelegt werden. Mittels der in dem Sockel 110, der hier ebenfalls plattenförmig ausgebildet ist, enthaltenen magnetisch wirkenden Anordnung wird die Trägerplatte 210 mitsamt dem Mobilfunkgerät 230 schwebend über dem Sockel 110 gehalten. Die Einrichtung, die den Speicher der schwebenden mobilen Einheit 200 induktiv und/oder kapazitiv lädt, ist, wie zuvor beschrieben, in dem Sockel 110 und in einer der Komponenten der mobilen Einheit 200 untergebracht, beispielsweise in der Trägerplatte 210. Es sind auch Ausgestaltungen denkbar, bei denen das zweite induktive Element bzw. das zweite kapazitive Element der Einrichtung dem Speicher für elektrische Energie, also beispielsweise dem Akkumulator des Mobilfunkgerätes 230, zugeordnet ist.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung wesentlich sein.

## Patentansprüche

1. System, das wenigstens umfasst:
- eine mobile Einheit (200), welche ein magnetisches Element (205) und einen Speicher (235) für elektrische Energie aufweist; und
- eine Vorrichtung (100) zum berührungslosen Laden der mobilen Einheit mit elektrischer Energie, wobei die Vorrichtung (100) einen Sockel (110) aufweist, in dem eine magnetisch wirkende Anordnung (140) und eine Steuerelektronik (160) zum Einrichten und Anpassen des von der magnetisch wirkenden Anordnung (140) erzeugten Magnetfeldes derart, dass die mobile Einheit (200) in der Schwebe gehalten wird, untergebracht sind,
wobei eine Einrichtung vorgesehen ist, die den Speicher (235) der schwebenden mobilen Einheit (200) induktiv und/oder kapazitiv lädt, **dadurch gekennzeichnet, dass** die mobile Einheit (200) würfelförmig ausgebildet und in der Schwebe über der Vorrichtung (100) angeordnet ist.

2. System nach Anspruch 1, **dadurch gekennzeichnet, dass** zum induktiven Laden des Speichers die Einrichtung ein erstes induktives Element (165) in oder an der Vorrichtung (100) und ein zweites induktives Element (265) in oder an der mobilen Einheit (200) aufweist.

3. System nach Anspruch 1, **dadurch gekennzeichnet, dass** zum kapazitiven Laden des Speichers die Einrichtung ein erstes kapazitives Element in oder an der Vorrichtung (100) und ein zweites kapazitives Element in oder an der mobilen Einheit (200) aufweist.

4. System nach Anspruch 1, **dadurch gekennzeichnet, dass** die Vorrichtung (100) einen Sensor zum Identifizieren der mobilen Einheit (200) aufweist.

5. System nach Anspruch 1, **dadurch gekennzeichnet, dass** die Vorrichtung (100) einen Positionssensor (150) aufweist, der die Position der mobilen Einheit (200) erfasst und ein entsprechendes Signal an die Steuerelektronik (160) ausgibt.

6. System nach Anspruch 1, **dadurch gekennzeichnet, dass** die Vorrichtung (100) eine Kommunikationseinheit (180) zum Kommunizieren mit der mobilen Einheit (200) und/oder zum Kommunizieren mit einem Gebäudesteuerungs-Bussystem aufweist.

7. System nach Anspruch 1, **dadurch gekennzeichnet, dass** die Vorrichtung (100) eine Anzeigeeinrichtung (180) für den Ladezustand des Speichers (235) für elektrische Energie der mobilen Einheit (200) aufweist.

8. System nach einem der Ansprüche 1 bis 7, **dadurch gekennzeichnet, dass** die mobile Einheit (200) einen Träger (210) umfasst, der an den Speicher (235) für elektrische Energie lösbar zu koppeln ist, wobei die Kopplung (220) eine elektrische Kopplung umfasst.

9. System nach Anspruch 8, soweit von Anspruch 2 abhängig, **dadurch gekennzeichnet, dass** das zweite induktive Element (265) bzw. das zweite kapazitive Element dem Speicher (235) für elektrische Energie zugeordnet ist.

10. System nach Anspruch 1, **dadurch gekennzeichnet, dass** der Sockel (110) eine Aufnahme (115) aufweist, in die die mobile Einheit (200) mit Punkt- und/oder Linienkontakt einzusetzen ist.

11. System nach Anspruch 1, **dadurch gekennzeichnet, dass** das magnetische Element (205) aus ferromagnetischem Material aufgebaut ist und als separates Bauteil oder integral mit der mobilen Einheit (200) ausgebildet ist.

12. System nach Anspruch 1, **dadurch gekennzeichnet, dass** die Vorrichtung (100) einen Mechanismus zum Auswerfen der mobilen Einheit (200) aufweist.
